# EUROPÄISCHE PATENTSCHRIFT

(11) **EP 3 617 331 B1**
(45) Veröffentlichungstag und Bekanntmachung des Hinweises auf die Patenterteilung: **22.02.2023**
(21) Anmeldenummer: 19186403.2
(22) Anmeldetag: 16.07.2019
(51) Int. Cl.: C14C 11/00, C09K 19/00, D06N 3/06, C14C 13/02, C09D 163/00, D06N 3/00, D06P 1/00, D06P 3/32, D06P 5/08

(54) **LEDER MIT VERÄNDERUNG DER OBERFLÄCHENFARBE IN ABHÄNGIGKEIT VON DER TEMPERATUR SOWIE VERFAHREN ZU DESSEN HERSTELLUNG**
LEATHER WITH ALTERATION OF SURFACE COLOUR DEPENDING ON TEMPERATURE AND METHOD FOR PRODUCING THE SAME
CUIR POUVANT CHANGER DE COULEUR EN FONCTION DE LA TEMPÉRATURE AINSI QUE SON PROCÉDÉ DE FABRICATION

(30) Priorität: 28.08.2018 CN 201810987574
(43) Veröffentlichungstag der Anmeldung: 04.03.2020
(73) Patentinhaber: Benecke-Kaliko AG, 30419 Hannover (DE)
(72) Erfinder: Xu, Yanqiu, Jinfeng, 215632 (CN); Liu, Haiyang, Yangshezhen, 215600 (CN); Teng, Dayong, Yangshezhen, 215600 (CN)
(74) Vertreter: Continental Corporation

(56) Entgegenhaltungen:
- FR-A1- 2 461 008
- DATABASE WPI Week 200016 Thomson Scientific, London, GB; AN 2000-177424 XP002796261, & JP 2000 027081 A (NAKAJIMA M) 25. Januar 2000 (2000-01-25)
- DATABASE WPI Week 201359 Thomson Scientific, London, GB; AN 2013-E73002 XP002796262, & CN 202 626 723 U (HU S) 26. Dezember 2012 (2012-12-26)

## Beschreibung

### Technisches Gebiet

Die vorliegende Erfindung betrifft ein Leder mit Veränderung der Oberflächenfarbe in Abhängigkeit von der Temperatur sowie ein Verfahren zu dessen Herstellung.

### Stand der Technik

Im Zuge der Steigerung des Modernisierungsgrads bestehen immer höhere Anforderungen der Verbraucher bezüglich der Ausstattung von Kraftfahrzeugen, insbesondere der Oberflächenmaterialien der Sitze. Beispielsweise erfolgten in den Patentanmeldungen CN 107190521 A und CN 105316954 A jeweils Offenbarungen von PCV-Kunstleder geringen Geruchs sowie von multifunktionalem, duftendem und umweltfreundlichem PVC-Leder und von Verfahren zu deren Herstellung.

Außerdem erfolgte auf dem Gebiet des Leders in der Patentanmeldung CN 1594600 A die Offenbarung eines Leders mit möglicher Veränderung von dessen Oberflächenfarbe sowie der Technologie zu dessen Herstellung, wobei auf der gesamten äußeren Oberfläche des Leders eine Materialschicht mit möglicher Farbveränderung aufgebracht ist. Zunächst erfolgt das Mischen von Farbstoff oder Pigment mit möglicher Farbveränderung, Polyurethan und Lösungsmittel, um anschließend das Gemisch von Farbstoff oder Pigment mit möglicher Farbveränderung, Lösungsmittel und Polyurethan durch Drucken oder Sprühen oder Überziehen an der äußeren Oberfläche des Leders anhaften zu lassen. Schließlich erfolgt durch Trocknung des Leders mit anhaftendem Gemisch von Farbstoff oder Pigment mit möglicher Farbveränderung, Lösungsmittel und Polyurethan bei hoher Temperatur die Bildung des Leders mit möglicher Veränderung von dessen Oberflächenfarbe. Bei dem Lösungsmittel handelt es sich normalerweise um Aceton, Dimethylformamid, Toluol oder deren Gemische. Die Oberflächenfarbe des betreffenden Leders kann in Abhängigkeit von der Temperaturveränderung oder der Bestrahlung mit UV-Licht eine Farbveränderung vollziehen.

Bei dem herkömmlichen Design von Kraftfahrzeug-Sitzen werden unterschiedliche Farben zusammengestellt, um ein ästhetisches Erscheinungsbild der Innenausstattung zu bewirken, wobei gelegentlich gemäß dem Bedarf des Kunden unterschiedliche LOGOS eingearbeitet sind. Im heißen Sommer ist die Temperatur im Fahrgastraum sehr hoch, wobei die Sitze als großflächiger Kontaktkörper eine sehr hohe Temperatur erreichen können. Zwar sind herkömmliche Kraftfahrzeug-Sitze äußerlich ansprechend gestaltet, was die Fahrzeugqualität steigert, aber es bestehen die folgenden Mängel: Bei einer übermäßig hohen Temperatur der Sitze besteht keine Möglichkeit des Hinweises an den Nutzer, was das Fahrempfinden des Nutzers beeinträchtigen kann.

FR 2461008 A1 beschreibt ein Leder mit temperaturabhängiger Farbänderung, wofür cholesterische Flüssigkristalle eingesetzt werden, die in einem Temperaturbereich von -10°C bis + 60°C von transparent in verschiedene Farbe wechseln können. Dabei wird eine Polyurethanschicht auf Leder aufgebracht, auf die eine Zusammensetzung aufgebracht wird, die die Flüssigkristalle enthält. Auf diese Schicht wird eine Schutzschicht aufgebracht.

### Inhalt der Erfindung

Basierend auf dem Stand der Technik besteht die Zielsetzung der vorliegenden Erfindung in der Bereitstellung eines Leders mit Veränderung der Oberflächenfarbe in Abhängigkeit von der Temperatur, wobei das betreffende Leder bei übermäßig hoher Temperatur eine Farbveränderung vollzieht, um nach einer Temperaturabsenkung wieder die ursprüngliche Farbe anzunehmen, so dass der Nutzer auf die Temperatur des betreffenden Leders aufmerksam gemacht wird. Die Zielsetzung der vorliegenden Erfindung besteht außerdem in der Bereitstellung eines Verfahrens zur Herstellung des betreffenden Leders.

Zur Verwirklichung der vorstehend bezeichneten technischen Zielsetzung stellt die vorliegende Erfindung ein Leder mit Veränderung der Oberflächenfarbe in Abhängigkeit von der Temperatur bereit, wobei das vorstehend bezeichnete Leder zumindest eine Leder-Basismaterialschicht und eine Lackschicht umfasst, wobei die vorstehend bezeichnete Lackschicht zumindest eine auf der vorstehend bezeichneten Leder-Basismaterialschicht aufgebrachte erste Lackschicht und eine auf der vorstehend bezeichneten ersten Lackschicht aufgebrachte Funktionsschicht umfasst, wobei in der vorstehend bezeichneten Funktionsschicht ein Mittel mit reversibler wärmeempfindlicher Farbveränderung vorhanden ist, so dass die vorstehend bezeichnete Funktionsschicht bei Erreichen einer Temperatur von 30-80 °C eine Farbveränderung vollzieht, wobei die vorstehend bezeichnete Funktionsschicht bevorzugt bei Erreichen einer Temperatur von 30-50 °C eine Farbveränderung vollzieht, wobei die vorstehend bezeichnete Funktionsschicht in Form eines bestimmten Musters bereichsweise auf der vorstehend bezeichneten ersten Lackschicht aufgebracht ist, wobei es sich bei dem vorstehend bezeichneten bestimmten Muster bevorzugt um ein LOGO handelt.

Hierbei kann die Leder-Basismaterialschicht aus Kunstleder oder Echtleder ausgewählt sein. Das Kunstleder umfasst übliches PVC-Kunstleder und TPO-Kunstleder. Die betreffende Leder-Basismaterialschicht kann mit oder ohne Basisstoff vorgesehen sein, wobei das mit Basisstoff vorgesehene PVC-Kunstleder üblicherweise als Oberflächenmaterial für Kraftfahrzeug-Sitze Verwendung findet, während das normalerweise ohne Basisstoff vorgesehene TPO-Kunstleder beispielsweise an Kraftfahrzeugtürplatten Verwendung findet.

Die erste Lackschicht kann eine oder mehrere Lackierungen umfassen, beispielsweise Grundierungslack, Oberflächenlack usw. Die betreffende erste Lackschicht dient der Klebeverbindung wobei durch eine gleichmäßige Oberflächenspannung bewirkt wird, dass die Funktionsschicht an der Leder-Basismaterialschicht anhaften kann, ohne dass eine Ablösung erfolgt.

Zur Verbesserung des ästhetischen Erscheinungsbildes des vorstehend bezeichneten Leders kann das vorstehend bezeichnete Leder in einer bestimmten Farbe hergestellt sein. Um den betreffenden Effekt zu erreichen, kann die vorstehend bezeichnete Leder-Basismaterialschicht farbig sein, ebenso wie die vorstehend bezeichnete erste Lackschicht farbig sein kann, beziehungsweise sowohl die vorstehend bezeichnete Leder-Basismaterialschicht als auch die vorstehend bezeichnete erste Lackschicht farbig sein können.Normalerweise gilt, dass wenn die vorstehend bezeichnete Leder-Basismaterialschicht farbig ist, die vorstehend bezeichnete erste Lackschicht üblicherweise transparent ist. Bei der vorliegenden Erfindung ist zur besseren Entfaltung der Hinweiswirkung der vorstehend bezeichneten Funktionsschicht vorgesehen, dass bei der Auswahl der Farbe der vorstehend bezeichneten Leder-Basismaterialschicht, beziehungsweise der Farbe der vorstehend bezeichneten ersten Lackschicht eine Abstimmung auf die Farbe der vorstehend bezeichneten Funktionsschicht zu erfolgen hat. Entscheidend bei der Abstimmung ist, dass die Farbe der vorstehend bezeichneten ersten Lackschicht beziehungsweise der vorstehend bezeichneten Leder-Basismaterialschicht keine Beeinträchtigung der Identifizierung der Farbveränderung der Funktionsschicht herbeiführen darf. Dies bedeutet, dass auch bei einer farbigen ersten Lackschicht und/oder Leder-Basismaterialschicht und selbst in Fällen tiefer Farbe bei einer Farbveränderung der Funktionsschicht in Anhängigkeit von Temperaturveränderungen nach wie vor die Farbveränderung der Funktionsschicht mit bloßem Auge erkennbar sein muss.

In die Funktionsschicht erfolgt die Beigabe von Mittel mit reversibler wärmeempfindlicher Farbveränderung. Bei Erreichen einer Oberflächentemperatur des Leders von 30°C-80°C vollzieht die Funktionsschicht eine allmähliche Farbveränderung. Je höher die Temperatur ist, desto signifikanter ist die Farbveränderung, so dass der Nutzer auf die gegenwärtige Temperatur des Leders aufmerksam gemacht wird. Wenn der Nutzer gemäß den Temperaturgegebenheiten eine Temperaturabsenkung zu Absenkung der Oberflächentemperatur des Leders auf unter 30°C vornimmt, verschwindet die Farbveränderung und es erfolgt die Wiederannahme der ursprünglichen Farbe. Hierbei ist vorgesehen, dass die Farbveränderung durch die Strukturveränderung des Mittels mit reversibler wärmeempfindlicher Farbveränderung hervorgerufen ist, wobei die Farbveränderung umso signifikanter ist, je stärker die Strukturveränderung ist. Die Struktur des Mittels mit reversibler wärmeempfindlicher Farbveränderung ist in Abhängigkeit von der Temperatur reversibel.

Bei einem praktischen Ausführungsbeispiel der vorliegenden Erfindung wird nach Beginn der Veränderung der Funktionsschicht von transparent zu farbig die Farbe der betreffenden Funktionsschicht in Abhängigkeit von der Temperaturerhöhung des betreffenden Leders immer tiefer, wobei die Farbe der betreffenden Funktionsschicht bevorzugt nach einer Temperaturerhöhung des betreffenden Leders auf eine bestimmte vergleichsweise hohe Temperatur keine weitere Veränderung mehr vollzieht. Bei einer durch Temperaturabsenkungsmaßnahmen erfolgten Temperaturabsenkung des vorstehend bezeichneten Leders wird die Farbe der betreffenden Funktionsschicht in Abhängigkeit von der Temperaturabsenkung des betreffenden Leders immer blasser. Bevorzugt ist vorgesehen, dass, falls die Temperatur des betreffenden Leders bei Beginn der Temperaturabsenkung nicht höher als die betreffende hohe Temperatur ist, die Farbe der betreffenden Funktionsschicht in Abhängigkeit von der Temperaturabsenkung des betreffenden Leders immer blasser, bis hin zur Veränderung zu transparent, wird, wobei, falls die Temperatur des betreffenden Leders bei Beginn der Temperaturabsenkung höher als die betreffende vergleichsweise hohe Temperatur ist, die Farbe der betreffenden Funktionsschicht in Abhängigkeit von der Temperaturabsenkung des betreffenden Leders zunächst unverändert bleibt, um anschließend immer blasser, bis hin zur Veränderung zu transparent, zu werden.

Bei einem optionalen praktischen Ausführungsbeispiel der vorliegenden Erfindung wird die Farbe der betreffenden Funktionsschicht nach Beginn der Veränderung der betreffenden Funktionsschicht von der ganz zu Beginn bestehenden Farbe her in Abhängigkeit von der Temperaturerhöhung des betreffenden Leders immer blasser, wobei die betreffende Funktionsschicht bevorzugt nach einer Temperaturerhöhung des betreffenden Leders auf eine bestimmte vergleichsweise hohe Temperatur sich zu transparent verändert und keine weitere Veränderung mehr vollzieht. Bei einer durch Temperaturabsenkungsmaßnahmen erfolgten Temperaturabsenkung des vorstehend bezeichneten Leders wird die Farbe der vorstehend bezeichneten Funktionsschicht in Abhängigkeit von der Temperaturabsenkung des betreffenden Leders immer tiefer. Bevorzugt ist vorgesehen, dass, falls die Temperatur des betreffenden Leders bei Beginn der Temperaturabsenkung nicht höher als die betreffende vergleichsweise hohe Temperatur ist, die Farbe der betreffenden Funktionsschicht in Abhängigkeit von der Temperaturabsenkung des betreffenden Leders immer tiefer, bis hin zur Veränderung zu der betreffenden ganz zu Beginn bestehenden Farbe, wird, wobei, falls die Temperatur des betreffenden Leders bei Beginn der Temperaturabsenkung höher als die betreffende vergleichsweise hohe Temperatur ist, die Farbe der betreffenden Funktionsschicht in Abhängigkeit von der Temperaturabsenkung des betreffenden Leders zunächst transparent bleibt, um anschließend immer tiefer, bis hin zur Veränderung zu der betreffenden ganz zu Beginn bestehenden Farbe zu werden.

Bei einem optionalen praktischen Ausführungsbeispiel der vorliegenden Erfindung vollzieht die betreffende Funktionsschicht nach Beginn der Veränderung der betreffenden Funktionsschicht von der ganz zu Beginn bestehenden Farbe her in Abhängigkeit von der Temperaturerhöhung des betreffenden Leders gemäß einer bestimmten Farbreihenfolge - beispielsweise der Farbreihenfolge rot, orange, gelb, grün, blau, indigoblau violett - eine Stufe oder mehrere Stufen der Farbveränderung. Bevorzugt vollzieht die betreffende Funktionsschicht nach einer Temperaturerhöhung des betreffenden Leders auf eine bestimmte vergleichsweise hohe Temperatur keine weitere Veränderung mehr. Bei einer durch Temperaturabsenkungsmaßnahmen erfolgten Temperaturabsenkung des vorstehend bezeichneten Leders vollzieht die betreffende Funktionsschicht in Abhängigkeit von der Temperaturabsenkung des betreffenden Leders gemäß der umgekehrten Reihenfolge der betreffenden bestimmten Farbreihenfolge - beispielsweise der Farbreihenfolge violett, indigoblau, blau, grün, gelb orange, rot - eine Stufe oder mehrere Stufen der Farbveränderung.Bevorzugt ist vorgesehen, dass, falls die Temperatur des betreffenden Leders bei Beginn der Temperaturabsenkung nicht höher als die betreffende vergleichsweise hohe Temperatur ist, die Farbe der betreffenden Funktionsschicht in Abhängigkeit von der Temperaturabsenkung des betreffenden Leders gemäß der umgekehrten Reihenfolge der betreffenden bestimmten Farbreihenfolge eine Stufe oder mehrere Stufen der Farbveränderung vollzieht, bis hin zur Veränderung zu der betreffenden ganz zu Beginn bestehenden Farbe, wobei, falls die Temperatur des betreffenden Leders bei Beginn der Temperaturabsenkung höher als die betreffende vergleichsweise hohe Temperatur ist, die Farbe der betreffenden Funktionsschicht in Abhängigkeit von der Temperaturabsenkung des betreffenden Leders zunächst unverändert bleibt, um anschließend gemäß der umgekehrten Reihenfolge der betreffenden bestimmten Farbreihenfolge eine Stufe oder mehrere Stufen der Farbveränderung, bis hin zur Veränderung zu der betreffenden ganz zu Beginn bestehenden Farbe, zu vollziehen.

Gemäß der vorliegenden Erfindung ist die betreffende Funktionsschicht in Form eines bestimmten Musters bereichsweise auf der betreffenden ersten Lackschicht aufgebracht, wobei es sich bei dem betreffenden bestimmten Muster bevorzugt um ein LOGO handelt. Wenn die
Ledertemperatur eine bestimmte Temperatur überschreitet, beispielsweise 30°C, zeigt das betreffende LOGO allmählich eine Farbe, wobei je höher die Temperatur ist, desto tiefer die Farbe ist, so dass der Nutzer über die Tiefe der Farbe des LOGOS eine grobe Beurteilung der Temperatur des Sitzes vornehmen kann, um anschließend zu entscheiden, ob Temperaturabsenkungsmaßnahmen zu erfolgen haben, wobei, wenn Temperaturabsenkungsmaßnahmen erfolgen, die Farbe des LOGOS umso blasser ist, je niedriger die Temperatur ist, bis die Temperatur auf die betreffende bestimmte Temperatur abgesenkt ist, beispielsweise 30°C, und das LOGO verschwindet.

Mit der Farbveränderung des bereichsweise vorgesehenen LOGOS in einer bestimmten Temperaturumgebung erfolgt gleichzeitig eine Verbesserung des ästhetischen Erscheinungsbildes und der Qualitätsklasse des Produkts.

Bei einem praktischen Ausführungsbeispiel der vorliegenden Erfindung ist das betreffende Mittel mit reversibler wärmeempfindlicher Farbveränderung aus organischem Farbstoff mit wärmeempfindlicher Farbveränderung, anorganischem Material mit wärmeempfindlicher Farbveränderung oder cholesterischem Flüssigkristallmittel mit Farbveränderung ausgewählt. Das betreffende Mittel mit reversibler wärmeempfindlicher Farbveränderung kann in Abhängigkeit von der Temperatur eine reversible Farbveränderung vollziehen, wobei wenn die Temperatur des Materials eine bestimmte Temperatur zur Farbveränderung erreicht oder überschreitet, eine Farbveränderung stattfindet, wobei, wenn die Temperatur unter die bestimmte Temperatur zur Farbveränderung fällt, die ursprüngliche Farbe wieder angenommen wird. Gemäß der vorliegenden Erfindung wird bevorzugt organisches Farbstoff mit wärmeempfindlicher Farbveränderung verwendet, wobei im Vergleich zu anorganischem Material mit wärmeempfindlicher Farbveränderung und cholesterischem Flüssigkristallmittel mit Farbveränderung das organische Farbstoff mit wärmeempfindlicher Farbveränderung eine deutlichere Farbe bietet bei empfindlicher Farbveränderung und günstigen Kosten sowie sicherer Verwendung.

Bei einem bevorzugten praktischen Ausführungsbeispiel der vorliegenden Erfindung sind die auf der Leder-Basismaterialschicht aufgebrachten Lackschichten sämtlich aus wasserbasierten Oberflächenbehandlungsmitteln gebildet. Im Vergleich zu herkömmlichen Lacken auf Lösungsmittelbasis erhöhen die bei der vorliegenden Erfindung verwendeten wasserbasierten Lacke die Sicherheit im Verlauf von Herstellung und Verwendung des Leders sowie dessen Umweltfreundlichkeit.

Bei einem praktischen Ausführungsbeispiel der vorliegenden Erfindung besteht das Oberflächenbehandlungsmittel zur Bildung der betreffenden Funktionsschicht nach Gewichtsanteilen aus: 20-40 Anteilen Harz, 15-50 Anteilen, bevorzugt 20-40 Anteilen, noch bevorzugter 20-30 Anteilen, Mittel mit reversibler wärmeempfindlicher Farbveränderung, 1-10 Anteilen Härtungsmittel, 30-90 Anteilen Wasser und 1-10 Anteilen, bevorzugt 1-6 Anteilen, Hilfsmittel.

Bei einem praktischen Ausführungsbeispiel der vorliegenden Erfindung besteht das Oberflächenbehandlungsmittel zur Bildung der betreffenden Lackschicht nach Gewichtsanteilen aus: 40-60 Anteilen Harz, 1-10 Anteilen Härtungsmittel, 30-90 Anteilen Wasser und 1-10 Anteilen, bevorzugt 1-6 Anteilen, Hilfsmittel.

Bei einem praktischen Ausführungsbeispiel der vorliegenden Erfindung ist auf der Funktionsschicht eine Schutzschicht zum Schutz der vorstehend bezeichneten Funktionsschicht aufgebracht, wobei die betreffende Schutzschicht bevorzugt eine größere Fläche als die Funktionsschicht aufweist und die Funktionsschicht vollständig abdeckt, wobei das Oberflächenbehandlungsmittel zur Bildung der vorstehend bezeichneten Schutzschicht bevorzugt nach Gewichtsanteilen aus 40-60 Anteilen Harz, 1-10 Anteilen Härtungsmittel, 30-90 Anteilen Wasser und 1-10 Anteilen, bevorzugt 1-6 Anteilen, Hilfsmittel besteht. Damit die vorstehend bezeichnete Funktionsschicht ihre Hinweisfunktion besser erfüllt, ist die betreffende Schutzschicht normalerweise transparent vorgesehen. Dadurch, dass die betreffende Schutzfläche eine größere Fläche als die Funktionsschicht aufweist und die Funktionsschicht vollständig abdeckt, wird ein besserer Schutz der Funktionsschicht durch die Schutzschicht bewirkt. Die betreffende Funktionsschicht wird nicht so leicht beschädigt und es kann gewährleistet werden, dass die betreffende Funktionsschicht zuverlässiger an der betreffenden Lederoberfläche anhaftet und sich nicht ablöst. Die betreffende Schutzschicht kann außerdem die gesamte Lederoberfläche abdecken, so dass die Reibungsbeständigkeitseigenschaften der gesamten Leder Oberfläche erhöht werden.

Bei der vorliegenden Erfindung kann die vorstehend bezeichnete Funktionsschicht auch als zweite Lackschicht bezeichnet werden, wobei die vorstehend bezeichnete Schutzschicht auch als dritte Lackschicht bezeichnet werden kann.

Bei der Zusammensetzung des vorstehend bezeichneten Oberflächenbehandlungsmittels kann das genannte Harz aus üblicherweise bei Fahrzeug-Innenausstattungen verwendeten Lacken ausgewählt sein, beispielsweise Acrylat, Epoxidharz, Polyvinyl, Polyurethanharz usw. Das genannte Härtungsmittel und das Hilfsmittel können nach Bedarf aus einem Fachmann des betreffenden technischen Gebietes geläufigen Materialien ausgewählt werden.

Wenn PVC-Kunstleder als Leder-Basismaterial verwendet wird, ist dies üblicherweise in zwei Schichten ausgebildet, nämlich einer mit Basisstoff behafteten PVC-Schaumschicht und einer auf der PVC-Schaumschicht befindlichen PVC-Verdichtungsschicht. Bevorzugt ist vorgesehen, dass das Ausgangsmaterial der PVC-Verdichtungsschicht nach Gewichtsanteilen umfasst: 40-60 Anteile Plastifizierungsmittel, 40-70 Anteile PVC-Pulver, 1-20 Anteile Pigmente, 0,5-5 Anteile UV-Adsorptionsmittel, 0,5-5 Anteile Antioxidationsmittel sowie optional 5-10 Anteile Stabilisator. Das Ausgangsmaterial der PVC-Schaumschicht umfasst nach Gewichtsanteilen: 40-60 Anteile Plastifizierungsmittel, 40-70 Anteile PVC-Pulver, 1-10 Anteile Pigmente, 1-10 Anteile Treibmittel, 1-10 Anteile Brandhemmungsmittel, 1-20 Anteile Füllmittel sowie optional 5-10 Anteile Stabilisator und 0,5-5 Anteile Antioxidationsmittel. Hierbei können Plastifizierungsmittel, Stabilisator, Antioxidationsmittel, UV-Adsorptionsmittel, Treibmittel, Brandhemmungsmittel usw. nach Bedarf aus einem Fachmann des betreffenden technischen Gebietes geläufigen Materialien ausgewählt werden.

Zur Verwirklichung der vorstehend bezeichneten Zielsetzung stellt die vorliegende Erfindung außerdem ein Verfahren zur Herstellung des vorstehend bezeichneten Leders mit Veränderung der Oberflächenfarbe in Abhängigkeit von der Temperatur bereit, wobei das betreffende Verfahren zumindest die nachstehend aufgeführten Schritte umfasst:
(A) Herstellung der Leder-Basismaterialschicht,
(B) Aufbringen der Lackschicht auf der betreffenden Leder-Basismaterialschicht, wobei die betreffende Lackschicht zumindest eine auf der betreffenden Leder-Basismaterialschicht aufgebrachte erste Lackschicht und eine auf der betreffenden ersten Lackschicht aufgebrachte Funktionsschicht umfasst,
   wobei der betreffenden Funktionsschicht ein Mittel mit reversibler wärmeempfindlicher Farbveränderung beigegeben ist, so dass die betreffende Funktionsschicht bei Erreichen einer Temperatur von 30-80°C eine Farbveränderung vollzieht, wobei die betreffende Funktionsschicht bevorzugt bei Erreichen einer Temperatur von 30-50°C eine Farbveränderung vollzieht.

Bei einem praktischen Ausführungsbeispiel der vorliegenden Erfindung erfolgt unter Verwendung einer mit einem bestimmten Muster versehenen Druckwalze auf der betreffenden ersten Lackschicht das Aufbringen der betreffenden Funktionsschicht, wobei bevorzugt eine Anpassung der Viskosität und der Fließeigenschaften des Oberflächenbehandlungsmittels der Funktionsschicht erfolgt, so dass lediglich das in der LOGO-Aussparung der betreffenden Druckwalze befindliche Oberflächenbehandlungsmittel an der Lederoberfläche anhaften kann, während das außerhalb der LOGO-Aussparung der betreffenden Druckwalze befindliche Oberflächenbehandlungsmittel nicht an der Lederoberfläche anhaften kann. Somit kann auf einfache Weise das bereichsweise vorgesehene Drucken des LOGOS auf die Lederoberfläche verwirklicht werden, wobei das betreffende bereichsweise vorgesehene LOGO in einer bestimmten Temperaturumgebung eine Farbveränderung vollziehen kann, so dass eine Verbesserung des ästhetischen Erscheinungsbildes und der Qualitätsklasse des Produkts erfolgt.

Bei einem praktischen Ausführungsbeispiel der vorliegenden Erfindung wird vor dem Aufbringen der betreffenden Funktionsschicht auf der betreffenden ersten Lackschicht auf der betreffenden ersten Lackschicht durch Hochtemperaturdrucken das erforderliche Muster aufgebracht. Somit werden die erforderliche äußere Erscheinung und Haptik des Leders verwirklicht. Dadurch, dass die Technologie des Musterdruckens auf das Leder vor dem Aufbringen der Funktionsschicht vorgesehen ist, kann das Risiko vermieden werden, dass durch hohe Temperatur und Druck Ungleichmäßigkeiten der Dicke der Funktionsschicht bis hin zu Beschädigungen der Funktionsschicht hervorgerufen werden. Durch die vorstehend bezeichnete Herstellungstechnologie bei der vorliegenden Erfindung können die Vollständigkeit und Gleichmäßigkeit der Funktionsschicht gewährleistet werden. Wenn es sich bei der Funktionsschicht beispielsweise um ein LOGO handelt, können die Vollständigkeit und das ästhetische Erscheinungsbild des Musters gewährleistet werden.

Das durch die vorliegende Erfindung hergestellte Leder mit Veränderung der Oberflächenfarbe in Abhängigkeit von der Temperatur kann bei der Innenausstattung von Kraftfahrzeugen Verwendung finden, insbesondere als Oberflächenmaterial für Kraftfahrzeug-Sitze.

Die technischen Merkmale und entsprechenden technischen Effekte finden auch bei der Herstellung des betreffenden Leders Anwendung, was an dieser Stelle keiner erneuten Darstellung bedarf.

Die Vorteile der vorliegenden Erfindung sind wie folgt: Wenn das Lederprodukt, beispielsweise das Oberflächenmaterial eines Kraftfahrzeug-Sitzes, eine übermäßig hohe Temperatur aufweist, findet eine Farbveränderung der Materialoberfläche statt, so dass der Nutzer auf die übermäßig hohe Temperatur aufmerksam gemacht wird. Nach einer Temperaturabsenkung nimmt die Lederoberfläche ihre ursprüngliche Farbe wieder an und der Nutzer wird darauf aufmerksam gemacht, dass Platz genommen werden kann. Gleichzeitig kann ein auf der Oberfläche bereichsweise vorgesehenes LOGO bei einer bestimmten Temperatur eine Farbveränderung vollziehen, was die Qualitätsklasse der Innenausstattung und das ästhetische Erscheinungsbild verbessert. Außerdem erhöht die Verwendung von wasserbasiertem Lack die Handhabungssicherheit bei der Herstellung und die Gesundheits- und Sicherheitseigenschaften des erhaltenen Produkts.

### Praktische Ausführungsbeispiele

Zum besseren Verständnis der technischen Konzeption der vorliegenden Erfindung für einen Fachmann des betreffenden technischen Gebietes erfolgt nachstehend aufgeführt in Verbindung mit praktischen Ausführungsbeispielen eine deutliche und vollständige Beschreibung der technischen Konzeption der vorliegenden Erfindung. Bei den beschriebenen praktischen Ausführungsbeispielen handelt es sich selbstverständlich lediglich um einen Teil der praktischen Ausführungsbeispiele der vorliegenden Erfindung und nicht um sämtliche praktische Ausführungsbeispiele. Basierend auf den praktischen Ausführungsbeispielen der vorliegenden Erfindung durch einen Fachmann des betreffenden technischen Gebietes ohne Aufwendung von kreativer Anstrengung erhaltene sonstige praktische Ausführungsbeispiele fallen sämtlich unter den Schutzumfang der vorliegenden Erfindung.

Bei der vorliegenden Erfindung kann das Leder mit Veränderung der Oberflächenfarbe in Abhängigkeit von der Temperatur durch die nachstehend aufgeführten Schritte hergestellt werden:
Mischen: Gemäß einem bestimmten Anteilsverhältnis erfolgt die Auswahl der jeweiligen erforderlichen Materialien, um durch ein übliches Verfahren unter Umrühren das Ausgangsmaterial des Leder-Basismaterials zu mischen, wobei jeweils die Materialmasse für die PVC-Verdichtungsschicht und die PVC-Schaumschicht hergestellt werden

Aufbringen: Auf einer Auftragsmaschine wird Trennpapier transportiert, um auf dem Trennpapier die Materialmasse der PVC-Verdichtungsschicht aufzubringen und bei 150-200°C Trocknung im Trocknungsschrank für 50-100 Sekunden vorzunehmen, anschließend auf der PVC-Verdichtungsschicht die Materialmasse der PVC-Schaumschicht aufzubringen, bei 150-200°C Trocknung im Trocknungsschrank für 90 Sekunden vorzunehmen, Kleber auf die Oberfläche der PVC-Schaumschicht aufzubringen und den Verbundbasisstoff zu erhalten. Anschließend wird das mit dem Verbundbasisstoff versehene PVC-Leder bei 150-200°C im Trocknungsschrank für 2-4 Minuten getrocknet und das Schäumen der PVC-Schaumschicht sowie die Gesamtplastifizierung des PVC-Leders ist abgeschlossen, wobei die endgültig verlangte Härte erhalten wird. Zuletzt wird das Trennpapier entfernt und die PVC-Basismaterialschicht mit Basisstoff erhalten.

Drucken: Auf der Oberfläche der Verdichtungsschicht des erhaltenen PVC-Basismaterials erfolgt mittels einer üblichen Druckwalze auf der gesamten Fläche das Aufbringen von wasserbasiertem Lack als erster Lackschicht, so dass keine Ablösung der später aufzubringenden Funktionsschicht erfolgt.

Musterdrucken: Bei einer Musterdrucktemperatur von 130-220°C erfolgt auf der bereits mit der Klebeschicht versehenen Lederoberfläche das Drucken des erforderlichen Musters, so dass die erforderliche äußere Erscheinung mit Muster und Haptik des PVC-Leders verwirklicht werden.

LOGO-Drucken: Mittels einer mit einem bestimmten LOGO versehenen Druckwalze erfolgt das Aufbringen von Mittel mit reversibler wärmeempfindlicher Farbveränderung enthaltendem wasserbasiertem Lack als Funktionsschicht, wobei entsprechend eine Anpassung von Viskosität und Fließeigenschaften des wasserbasierten Lacks erfolgt, so dass die Druckwalze lediglich den in der LOGO-Aussparung befindlichen wasserbasierten Lack auf die Klebeschicht druckt.

Aufbringen der Schutzschicht: Nach Bedarf kann auf der Funktionsschicht eine zusätzliche Schicht von wasserbasiertem Lack als Schutzschicht aufgebracht werden.

Schneiden: Nach Anforderung des Kunden wird das Produkt geschnitten.

### Praktisches Ausführungsbeispiel 1

Herstellung des Leders mit Veränderung der Oberflächenfarbe in Abhängigkeit von der Temperatur:
Mischen: Gemäß dem in der nachstehend aufgeführten Tabelle 1 angegebenen Anteilsverhältnis der jeweiligen Materialien erfolgt durch ein übliches Verfahren unter Umrühren das Mischen des Ausgangsmaterials für das Leder-Basismaterial, wobei jeweils die Materialmasse für die PVC-Verdichtungsschicht und die PVC-Schaumschicht hergestellt werden.

Aufbringen: Auf einer Auftragsmaschine wird Trennpapier transportiert, um auf dem Trennpapier die Materialmasse der PVC-Verdichtungsschicht aufzubringen und bei 170°C Trocknung im Trocknungsschrank für 90 Sekunden vorzunehmen, anschließend auf der PVC-Verdichtungsschicht die Materialmasse der PVC-Schaumschicht aufzubringen, bei 170°C Trocknung im Trocknungsschrank für 90 Sekunden vorzunehmen, Kleber auf die Oberfläche der PVC-Schaumschicht aufzubringen und den Verbundbasisstoff zu erhalten. Anschließend wird das mit dem Verbundbasisstoff versehene PVC-Leder bei 180°C im Trocknungsschrank für 3 Minuten getrocknet und das Schäumen der PVC-Schaumschicht sowie die Gesamtplastifizierung des PVC-Leders ist abgeschlossen, wobei die endgültig verlangte Härte erhalten wird.Zuletzt wird das Trennpapier entfernt und die PVC-Basismaterialschicht mit Basisstoff erhalten.

Drucken: Auf der Oberfläche der Verdichtungsschicht des erhaltenen PVC-Basismaterials erfolgt mittels einer üblichen Druckwalze auf der gesamten Fläche das Aufbringen von wasserbasiertem Lack als erster Lackschicht. Es erfolgt Trocknung bei einer Temperatur von 100°C. Zu der Zusammensetzung des Lacks der betreffenden ersten Lacksicht siehe Tabelle 1.

Musterdrucken: Bei einer Musterdrucktemperatur von 150°C erfolgt auf der bereits mit der ersten Lackschicht versehenen Lederoberfläche das Drucken des erforderlichen Musters, so dass die erforderliche äußere Erscheinung mit Muster und Haptik des PVC-Leders wie bei Echtleder verwirklicht werden.

LOGO-Drucken: Mittels einer mit einem bestimmten LOGO versehenen Druckwalze erfolgt das Aufbringen von Mittel mit reversibler wärmeempfindlicher Farbveränderung enthaltendem wasserbasiertem Lack als Funktionsschicht, wobei entsprechend eine Anpassung von Viskosität und Fließeigenschaften des wasserbasierten Lacks erfolgt, so dass die Druckwalze lediglich den in der LOGO-Aussparung befindlichen wasserbasierten Lack auf die Klebeschicht druckt. Es erfolgt Trocknung bei einer Temperatur von 100°C. Zu der Zusammensetzung des Lacks der betreffenden Funktionsschicht siehe Tabelle 1.

Schneiden: Nach Anforderung des Kunden wird das Produkt geschnitten.

Die Schichtenstruktur des somit erhaltenen PVC-Leders ist wie folgt: Lackschicht, PVC-Verdichtungsschicht, PVC-Schaumschicht und Basisstoffschicht. Hierbei umfasst die Lackschicht eine erste Lackschicht und eine darauf bereichsweise vorgesehene Funktionsschicht. Die Funktionsschicht mit möglicher Farbveränderung ist in Form eines LOGOS bereichsweise auf der Lederoberfläche vorgesehen. Hierbei können die Dicke der PVC-Schaumschicht und der PVC-Verdichtungsschicht nach Belieben vorgesehen sein und betragen normalerweise 0,5 mm-2,0 mm. Die Gesamtdicke der die erste Lackschicht und die Funktionsschicht umfassenden Lackschicht beträgt ungefähr 5µm-20µm.

Das erhaltene PVC-Leder dient nach dem Zuschnitt als Oberflächenmaterial für Kraftfahrzeug-Sitze.

Bei dem vorliegenden praktischen Ausführungsbeispiel besteht der organische Farbstoff mit wärmeempfindlicher Farbveränderung aus den drei Bestandteilen Leukofarbstoff, chromogener Substanz sowie der Kontrolle der Temperatur der Farbveränderung dienendem Sensibilisator. Zwischen dem Leukofarbstoff und der chromogenen Substanz besteht ein Elektronen-Donator-Akzeptor-Effekt, so dass die Struktur des Leukofarbstoffs eine Veränderung mit Ringöffnung oder Ringschluss erfährt und somit eine Veränderung der Lichtadsorptionseigenschaften stattfindet, was die Farbveränderung bewirkt. Durch den Sensibilisator wird der Aufbau eines Gleichgewichtssystems von ElektronenDonator-Akzeptor zwischen den beiden Bestandteilen gefördert, um die Zielsetzung der Kontrolle der Temperatur sowie der Reversibilität der Farbveränderung zu erreichen.Durch die Auswahl der chromogenden Substanz können unterschiedliche Farben dargestellt werden.

Der Kraftfahrzeug-Sitz erfährt unter Lichtstrahlung eine beginnende Temperaturerhöhung und bei einer Sitz-Temperatur von ungefähr 29°C beginnt die Farbveränderung. Das auf dem Sitz vorgesehene LOGO vollzieht eine Farbveränderung von keiner gebotenen Farbe (also wird die ursprüngliche Lederfarbe geboten) her zu einer allmählich tiefer werdenden Farbe, die immer stärker rot ist, um bei ungefähr 34°C die Farbveränderung abzuschließen. Nachdem der Nutzer das LOGO gesehen hat, kann anhand der Tiefe der Farbe eine grobe Beurteilung der Temperatur des Sitzes vorgenommen werden, um geeignete Temperaturabsenkungsmaßnahmen zu ergreifen. Bei ungefähr 32°C beginnt die Farbveränderung, wobei die Farbe in Abhängigkeit von der Temperaturabsenkung allmählich blasser wird, um bei ungefähr 23°C die Farbveränderung abzuschließen, wobei das LOGO verschwindet (also wieder die ursprüngliche Lederfarbe angenommen wird) und Platz genommen werden kann.

### Praktisches Ausführungsbeispiel 2

Es erfolgt die Herstellung des Leders mit den Zusammensetzungen der Schichten wie in Tabelle 1 angegeben, wobei das Verfahren der Herstellung mit dem praktischen Ausführungsbeispiel 1 übereinstimmt.

Die Schichtenstruktur des somit erhaltenen PVC-Leders ist wie folgt: Lackschicht, PVC-Verdichtungsschicht, PVC-Schaumschicht und Basisstoffschicht. Hierbei umfasst die Lackschicht eine erste Lackschicht und eine darauf bereichsweise vorgesehene Funktionsschicht. Die Funktionsschicht mit möglicher Farbveränderung ist in Form eines LOGOS bereichsweise auf der Lederoberfläche vorgesehen.Hierbei können die Dicke der PVC-Schaumschicht und der PVC-Verdichtungsschicht nach Belieben vorgesehen sein und betragen normalerweise 0,5 mm-2,0 mm. Die Gesamtdicke der die erste Lackschicht und die Funktionsschicht umfassenden Lackschicht beträgt ungefähr 5µm-20µm.

Das erhaltene PVC-Leder dient nach dem Zuschnitt als Oberflächenmaterial für Kraftfahrzeug-Sitze.

Bei dem vorliegenden praktischen Ausführungsbeispiel besteht das anorganische Material mit wärmeempfindlicher Farbveränderung zumeist aus Metallen und Metallhalogeniden, deren Kristallstruktur bei hoher Temperatur eine Veränderung erfährt, was die Farbveränderung bewirkt. Je höher die Temperatur, desto signifikanter ist die Farbveränderung, wobei bei einer Abkühlung auf Raumtemperatur die Kristallstruktur ihren ursprünglichen Zustand wiedererlangt und auch die ursprüngliche Farbe wieder angenommen wird.

Der Kraftfahrzeug-Sitz erfährt unter Lichtstrahlung eine beginnende Temperaturerhöhung und im Falle der Verwendung von Ag₂H_{g}I₄ beginnt bei einer Sitz-Temperatur von ungefähr 50°C die Farbveränderung. Das LOGO bietet eine Farbveränderung von gelber zu oranger Farbe. Je höher die Temperatur ist, desto signifikanter ist die Farbveränderung. Der Nutzer kann anhand des Ausmaßes der Farbveränderung des LOGOS eine grobe Beurteilung der Temperatur des Sitzes vornehmen, um geeignete Temperaturabsenkungsmaßnahmen zu ergreifen. Nach der Abkühlung wird wieder die ursprüngliche Farbe angenommen und es erfolgt die Farbveränderung zu gelber Farbe.

### Praktisches Ausführungsbeispiel 3

Es erfolgt die Herstellung des Leders mit den Zusammensetzungen der Schichten wie in Tabelle 1 angegeben, wobei das Verfahren der Herstellung mit dem praktischen Ausführungsbeispiel 1 übereinstimmt.

Die Schichtenstruktur des somit erhaltenen PVC-Leders ist wie folgt: Lackschicht, PVC-Verdichtungsschicht, PVC-Schaumschicht und Basisstoffschicht. Hierbei umfasst die Lackschicht eine erste Lackschicht und eine darauf bereichsweise vorgesehene Funktionsschicht. Die Funktionsschicht mit möglicher Farbveränderung ist in Form eines LOGOS bereichsweise auf der Lederoberfläche vorgesehen. Hierbei können die Dicke der PVC-Schaumschicht und der PVC-Verdichtungsschicht nach Belieben vorgesehen sein und beträgt normalerweise 0,5mm-2,0mm. Die Gesamtdicke der die erste Lackschicht und die Funktionsschicht umfassenden Lackschicht beträgt ungefähr 5µm-20µm.

Das erhaltene PVC-Leder dient nach dem Zuschnitt als Oberflächenmaterial für Kraftfahrzeug-Sitze.

Bei dem vorliegenden praktischen Ausführungsbeispiel weisen die Flüssigkristallmoleküle des cholesterischen Flüssigkristallmittels mit Farbveränderung eine bestimmte Molekularanordnung auf, wobei die Verdrillung ähnlich dem sichtbaren Licht ist, was die Empfindlichkeit für Licht und Temperatur erhöht. In Abhängigkeit von der Temperaturveränderung ändert sich die Schraubenstruktur des cholesterischen Flüssigkristalls und es finden Veränderungen von Lichtbrechung und Lichtreflexion sowie Farbe statt. Bei Tageslicht erfolgt im Zuge einer Erhöhung der Temperatur eine Farbveränderung der Flüssigkristalle in der Farbreihenfolge rot, orange, gelb, grün, blau, indigoblau violett, während bei einer Temperaturabsenkung in der umgekehrten Reihenfolge eine Farbveränderung erfolgt. Der Nutzer kann anhand der Farbveränderung des LOGOS eine grobe Beurteilung der Temperatur des Sitzes vornehmen und geeignete Temperaturabsenkungsmaßnahmen ergreifen.

### Praktisches Ausführungsbeispiel 4

Es erfolgt die Herstellung des Leders mit den Zusammensetzungen der Schichten wie in Tabelle 1 angegeben, wobei das Verfahren der Herstellung mit dem praktischen Ausführungsbeispiel 1 übereinstimmt. Der Unterschied besteht darin, dass auf der gesamten Oberfläche des Leders eine Schutzschicht aus wasserbasiertem Lack aufgebracht ist, wobei die Zusammensetzung des Lacks in Tabelle 1 angegeben ist. Die betreffende Schutzschicht dient dem Schutz der Funktionsschicht, so dass diese nicht einfach, beispielsweise durch Ablösen, usw. beschädigt wird. Außerdem können die Reibungsbeständigkeitseigenschaften des Leders erhöht werden.

Die Schichtenstruktur des somit erhaltenen PVC-Leders ist wie folgt: Lackschicht, PVC-Verdichtungsschicht, PVC-Schaumschicht und Basisstoffschicht. Hierbei umfasst die Lackschicht eine erste Lackschicht und eine darauf bereichsweise vorgesehene Funktionsschicht sowie ein ganz außen vorgesehene Schutzschicht. Die Funktionsschicht mit möglicher Farbveränderung ist in Form eines LOGOS bereichsweise auf der Lederoberfläche vorgesehen. Hierbei können die Dicke der PVC-Schaumschicht und der PVC-Verdichtungsschicht nach Belieben vorgesehen sein und beträgt normalerweise 0,5mm-2,0mm. Die Gesamtdicke der die erste Lackschicht und die Funktionsschicht umfassenden Lackschicht beträgt ungefähr 5µm-20µm.

Das erhaltene PVC-Leder dient nach dem Zuschnitt als Oberflächenmaterial für Kraftfahrzeug-Sitze.

Im Vergleich zu dem praktischen Ausführungsbeispiel 1 haftet die LOGO-Schicht bei dem vorliegenden praktischen Ausführungsbeispiel fester an und löst sich nicht einfach ab, wobei das Oberflächenmaterial des Sitzes gleichzeitig reibungsbeständiger ist.

Es ist darauf hinzuweisen, dass bei den in den vorstehend aufgeführten praktischen Ausführungsbeispielen Abweichungen der Temperatur mit Farbveränderung auftreten können, wobei in unterschiedlichen Umgebungen und bei unterschiedlichen Messverfahren die gemessene Temperatur der Farbveränderung Abweichungen von 2-5°C aufweisen kann, was für einen Fachmann des betreffenden technischen Gebietes verständlich ist.

**Tabelle 1: Zusammensetzung der jeweiligen Schichten bei unterschiedlichen praktischen Ausführungsbeispielen (nach Gewichtsanteilen)**

| Bestandteil | | Praktisches Ausführungsbeispiel 1 | Praktisches Ausführungsbeispiel 2 | Praktisches Ausführungsbeispiel 3 | Praktisches Ausführungsbeispiel 4 |
|---|---|---|---|---|---|
| PVC-Schaum Schicht | Polyvinylchlorid | 50 Anteile | 40 Anteile | 70 Anteile | 50 Anteile |
| | Phthalat-Plastifizierungs-mittel | 40 Anteile | 50 Anteile | 60 Anteile | 40 Anteile |
| | Farbmittel | 5 Anteile | 1 Anteil | 10 Anteile | 5 Anteile |
| | Azodicarboxamid-Treibmittel | 2 Anteile | 1 Anteil | 10 Anteile | 2 Anteile |
| | Antimon-Brandhemmungsmittel | 3 Anteile | 1 Anteil | 10 Anteile | 3 Anteile |
| | Calciumcarbonat-Füllmittel | 10 Anteile | 1 Anteil | 20 Anteile | 10 Anteile |
| PVC-Ver dichtungs schicht | Polyvinylchlorid | 50 Anteile | 40 Anteile | 70 Anteile | 50 Anteile |
| | Phthalat-Plastifizierungs-mittel | 40 Anteile | 50 Anteile | 60 Anteile | 40 Anteile |
| | Farbmittel | 5 Anteile | 1 Anteil | 20 Anteile | 5 Anteile |
| | Calcium-Zink-Thermo-stabilisator | 5 Anteile | 6 Anteile | 10 Anteile | 5 Anteile |
| | Diphenyl-keton-UV-Adsorptionsmittel | 0.5 Anteile | 1 Anteil | 5 Anteile | 0.5 Anteile |
| | Antioxidationsmittel sterisch gehinderter Phenole | 0.5 Anteile | 1 Anteil | 5 Anteile | 0.5 Anteile |
| Erste Lackschicht | Epoxidharz | 50 Anteile | 40 Anteile | 60 Anteile | 50 Anteile |
| | Wasser | 36 Anteile | 30 Anteile | 90 Anteile | 36 Anteile |
| | Härtungs-mittel aromati-scher Amine | 10 Anteile | 1 Anteil | 8 Anteile | 10 Anteile |
| | Silizium-dioxid-Hilfs-mittel | 4 Anteile | 1 Anteil | 6 Anteile | 10 Anteile |
| Funk tionsschicht | Organischer Farbstoff mit wärme-empfindlicher Farbveränderung | 20 Anteile | | | 30 Anteile |
| | Anorga-nisches Material mit wärmeempfindli-cher Farbveränderung | | 50 Anteile | | |
| | Cho leste-risches Flüssig-kristall mit Farbveränderung | | | 15 Anteile | |
| | Epoxidharz | 30 Anteile | 20 Anteile | 40 Anteile | 30 Anteile |
| | Wasser | 36 Anteile | 30 Anteile | 90 Anteile | 36 Anteile |
| | Härtungs-mittel aromati-scher Amine | 10 Anteile | 1 Anteil | 8 Anteile | 10 Anteile |
| | Silizium-dioxid-Hilfsmittel | 4 Anteile | 1 Anteil | 6 Anteile | 10 Anteile |
| Schutzschicht | Epoxidharz | | | | 50 Anteile |
| | Wasser | | | | 36 Anteile |
| | Härtungs-mittel aromatischer Amine | | | | 10 Anteile |
| | Silizium-dioxid-Hilfsmittel | | | | 4 Anteile |

Es versteht sich, dass es sich bei den vorstehend aufgeführten praktischen Ausführungsbeispielen lediglich um beispielhafte Ausführungsformen zur Erläuterung des Prinzips der vorliegenden Erfindung handelt, ohne dass die vorliegende Erfindung hierauf beschränkt ist.

## Patentansprüche

1. Leder mit Veränderung der Oberflächenfarbe in Abhängigkeit von der Temperatur, wobei das vorstehend bezeichnete Leder zumindest eine Leder-Basismaterialschicht und eine Lackschicht umfasst, wobei die vorstehend bezeichnete Lackschicht zumindest eine auf der vorstehend bezeichneten Leder-Basismaterialschicht aufgebrachte erste Lackschicht und eine auf der vorstehend bezeichneten ersten Lackschicht aufgebrachte Funktionsschicht umfasst,
wobei in der vorstehend bezeichneten Funktionsschicht ein Mittel mit reversibler wärmeempfindlicher Farbveränderung vorhanden ist, so dass die vorstehend bezeichnete Funktionsschicht bei Erreichen einer Temperatur von 30-80 °C eine Farbveränderung vollzieht, wobei die vorstehend bezeichnete Funktionsschicht bevorzugt bei Erreichen einer Temperatur von 30-50 °C eine Farbveränderung vollzieht, **dadurch gekennzeichnet, dass**
die vorstehend bezeichnete Funktionsschicht in Form eines bestimmten Musters bereichsweise auf der vorstehend bezeichneten ersten Lackschicht aufgebracht ist, wobei es sich bei dem vorstehend bezeichneten bestimmten Muster bevorzugt um ein LOGO handelt.

2. Leder nach Anspruch 1, **dadurch gekennzeichnet, dass**
nach Beginn der Veränderung der vorstehend bezeichneten Funktionsschicht von transparent zu farbig die Farbe der vorstehend bezeichneten Funktionsschicht in Abhängigkeit von der Temperaturerhöhung des vorstehend bezeichneten Leders immer tiefer wird, wobei die Farbe der vorstehend bezeichneten Funktionsschicht bevorzugt nach einer Temperaturerhöhung des vorstehend bezeichneten Leders auf eine bestimmte vergleichsweise hohe Temperatur keine weitere Veränderung mehr vollzieht,
beziehungsweise, dass nach Beginn der Veränderung der vorstehend bezeichneten Funktionsschicht von der ganz zu Beginn bestehenden Farbe her die Farbe der vorstehend bezeichneten Funktionsschicht in Abhängigkeit von der Temperaturerhöhung des vorstehend bezeichneten Leders immer blasser wird, wobei die vorstehend bezeichnete Funktionsschicht bevorzugt nach einer Temperaturerhöhung des vorstehend bezeichneten Leders auf eine bestimmte vergleichsweise hohe Temperatur sich zu transparent verändert und keine weitere Veränderung mehr vollzieht,
beziehungsweise, dass nach Beginn der Veränderung der vorstehend bezeichneten Funktionsschicht von der ganz zu Beginn bestehenden Farbe her die vorstehend bezeichnete Funktionsschicht in Abhängigkeit von der Temperaturerhöhung des vorstehend bezeichneten Leders gemäß einer bestimmten Farbreihenfolge eine Stufe oder mehrere Stufen der Farbveränderung vollzieht, wobei die Farbe der vorstehend bezeichneten Funktionsschicht bevorzugt nach einer Temperaturerhöhung des vorstehend bezeichneten Leders auf eine bestimmte vergleichsweise hohe Temperatur keine weitere Veränderung mehr vollzieht.

3. Leder nach Anspruch 2, **dadurch gekennzeichnet, dass** bei einer durch Temperaturabsenkungsmaßnahmen erfolgten Temperaturabsenkung des vorstehend bezeichneten Leders
die Farbe der vorstehend bezeichneten Funktionsschicht in Abhängigkeit von der Temperaturabsenkung des vorstehend bezeichneten Leders immer blasser wird, wobei bevorzugt, falls die Temperatur des vorstehend bezeichneten Leders bei Beginn der Temperaturabsenkung nicht höher als die vorstehend bezeichnete vergleichsweise hohe Temperatur ist, die Farbe der vorstehend bezeichneten Funktionsschicht in Abhängigkeit von der Temperaturabsenkung des vorstehend bezeichneten Leders immer blasser, bis hin zur Veränderung zu transparent, wird, wobei, falls die Temperatur des vorstehend bezeichneten Leders bei Beginn der Temperaturabsenkung höher als die vorstehend bezeichnete vergleichsweise hohe Temperatur ist, die Farbe der vorstehend bezeichneten Funktionsschicht in Abhängigkeit von der Temperaturabsenkung des vorstehend bezeichneten Leders zunächst unverändert bleibt, um anschließend immer blasser, bis hin zur Veränderung zu transparent, zu werden,
beziehungsweise, dass die Farbe der vorstehend bezeichneten Funktionsschicht in Abhängigkeit von der Temperaturabsenkung des vorstehend bezeichneten Leders immer tiefer wird, wobei bevorzugt, falls die Temperatur des vorstehend bezeichneten Leders bei Beginn der Temperaturabsenkung nicht höher als die vorstehend bezeichnete vergleichsweise hohe Temperatur ist, die Farbe der vorstehend bezeichneten Funktionsschicht in Abhängigkeit von der Temperaturabsenkung des vorstehend bezeichneten Leders immer tiefer, bis hin zur Veränderung zu der vorstehend bezeichneten ganz zu Beginn bestehenden Farbe, wird, wobei, falls die Temperatur des vorstehend bezeichneten Leders bei Beginn der Temperaturabsenkung höher als die vorstehend bezeichnete vergleichsweise hohe Temperatur ist, die Farbe der vorstehend bezeichneten Funktionsschicht in Abhängigkeit von der Temperaturabsenkung des vorstehend bezeichneten Leders zunächst transparent bleibt, um anschließend immer tiefer, bis hin zur Veränderung zu der vorstehend bezeichneten ganz zu Beginn bestehenden Farbe zu werden,
beziehungsweise, dass die vorstehend bezeichnete Funktionsschicht in Abhängigkeit von der Temperaturabsenkung des vorstehend bezeichneten Leders gemäß der umgekehrten Reihenfolge der vorstehend bezeichneten bestimmten Farbreihenfolge eine Stufe oder mehrere Stufen der Farbveränderung, bis hin zur Veränderung zu der vorstehend bezeichneten ganz zu Beginn bestehenden Farbe, vollzieht, wobei, falls die Temperatur des vorstehend bezeichneten Leders bei Beginn der Temperaturabsenkung höher als die vorstehend bezeichnete vergleichsweise hohe Temperatur ist, die Farbe der vorstehend bezeichneten Funktionsschicht in Abhängigkeit von der Temperaturabsenkung des vorstehend bezeichneten Leders zunächst unverändert bleibt, um anschließend gemäß der umgekehrten Reihenfolge der vorstehend bezeichneten bestimmten Farbreihenfolge eine Stufe oder mehrere Stufen der Farbveränderung, bis hin zur Veränderung zu der vorstehend bezeichneten ganz zu Beginn bestehenden Farbe, zu vollziehen.

4. Leder nach Anspruch 1, **dadurch gekennzeichnet, dass** das vorstehend bezeichnete Mittel mit reversibler wärmeempfindlicher Farbveränderung aus organischem Farbstoff mit wärmeempfindlicher Farbveränderung, anorganischem Material mit wärmeempfindlicher Farbveränderung oder cholesterischem Flüssigkristallmittel mit Farbveränderung ausgewählt ist.

5. Leder nach Anspruch 1, **dadurch gekennzeichnet, dass** das Oberflächenbehandlungsmittel zur Bildung der vorstehend bezeichneten Funktionsschicht nach Gewichtsanteilen aus 20-40 Anteilen Harz, 15-50 Anteilen, bevorzugt 20-40 Anteilen, noch bevorzugter 20-30 Anteilen, Mittel mit reversibler wärmeempfindlicher Farbveränderung, 1-10 Anteilen Härtungsmittel, 30-90 Anteilen Wasser und 1-10 Anteilen, bevorzugt 1-6 Anteilen, Hilfsmittel besteht.

6. Leder nach Anspruch 1, **dadurch gekennzeichnet, dass** das Oberflächenbehandlungsmittel zur Bildung der vorstehend bezeichneten Lackschicht nach Gewichtsanteilen aus 40-60 Anteilen Harz, 1-10 Anteilen Härtungsmittel, 30-90 Anteilen Wasser und 1-10 Anteilen, bevorzugt 1-6 Anteilen, Hilfsmittel besteht.

7. Leder nach einem beliebigen der Ansprüche 1-6, **dadurch gekennzeichnet, dass** auf der vorstehend bezeichneten Funktionsschicht eine Schutzschicht aufgebracht ist, wobei die vorstehend bezeichnete Schutzschicht bevorzugt eine größere Fläche als die vorstehend bezeichnete Funktionsschicht aufweist und die vorstehend bezeichnete Funktionsschicht vollständig abdeckt, wobei das Oberflächenbehandlungsmittel zur Bildung der vorstehend bezeichneten Schutzschicht bevorzugt nach Gewichtsanteilen aus 40-60 Anteilen Harz, 1-10 Anteilen Härtungsmittel, 30-90 Anteilen Wasser und 1-10 Anteilen, bevorzugt 1-6 Anteilen, Hilfsmittel besteht.

8. Verfahren zur Herstellung des Leders mit Veränderung der Oberflächenfarbe in Abhängigkeit von der Temperatur nach einem beliebigen der Ansprüche 1-7, **dadurch gekennzeichnet, dass** das vorstehend bezeichnete Verfahren zumindest die folgenden Schritte umfasst:
(A) Herstellen der Leder-Basismaterialschicht,
(B) Aufbringen der Lackschicht auf der vorstehend bezeichneten Leder-Basismaterialschicht, wobei die vorstehend bezeichnete Lackschicht zumindest eine auf der betreffenden Leder-Basismaterialschicht aufgebrachte erste Lackschicht und eine auf der vorstehend bezeichneten ersten Lackschicht aufgebrachte Funktionsschicht umfasst,
**dadurch gekennzeichnet, dass**
der vorstehend bezeichneten Funktionsschicht ein Mittel mit reversibler wärmeempfindlicher Farbveränderung beigegeben ist, so dass die vorstehend bezeichnete betreffende Funktionsschicht bei Erreichen einer Temperatur von 30-80 °C eine Farbveränderung vollzieht, wobei die vorstehend bezeichnete Funktionsschicht bevorzugt bei Erreichen einer Temperatur von 30-50°C eine Farbveränderung vollzieht.

9. Verfahren nach Anspruch 8, **dadurch gekennzeichnet, dass** unter Verwendung einer mit einem bestimmten Muster versehenen Druckwalze auf der vorstehend bezeichneten ersten Lackschicht das Aufbringen der vorstehend bezeichneten Funktionsschicht erfolgt, wobei bevorzugt eine Anpassung der Viskosität und der Fließeigenschaften des Oberflächenbehandlungsmittels der Funktionsschicht erfolgt, so dass lediglich das in der LOGO-Aussparung der vorstehend bezeichneten Druckwalze befindliche Oberflächenbehandlungsmittel an der Lederoberfläche anhaften kann, während das außerhalb der LOGO-Aussparung der vorstehend bezeichneten Druckwalze befindliche Oberflächenbehandlungsmittel nicht an der Lederoberfläche anhaften kann.

10. Verfahren nach Anspruch 8 oder 9, **dadurch gekennzeichnet, dass** vor dem Aufbringen der vorstehend bezeichneten Funktionsschicht auf der vorstehend bezeichneten ersten Lackschicht das erforderliche Muster auf der vorstehend bezeichneten ersten Lackschicht durch Hochtemperaturdrucken aufgebracht wird.

## Claims

1. Leather with change of surface colour depending on the temperature, where the aforesaid leather comprises at least a leather base material layer and a coating material layer, where the aforesaid coating material layer comprises at least a first coating material layer applied on the aforesaid leather base material layer, and a functional layer applied on the aforesaid first coating material layer,
where in the aforesaid functional layer there is an agent with reversible heat-sensitive colour change, so that the aforesaid functional layer performs a colour change on reaching a temperature of 30 - 80°C, where the aforesaid functional layer performs a colour change preferably on reaching a temperature of 30 - 50°C, **characterized in that**
the aforesaid functional layer is applied regionally on the aforesaid first coating material layer in the form of a particular pattern, the aforesaid particular pattern preferably being a LOGO.

2. Leather according to Claim 1, **characterized in that**
after the beginning of the change of the aforesaid functional layer from transparent to coloured, the colour of the aforesaid functional layer becomes deeper and deeper depending on the temperature increase of the aforesaid leather, where the colour of the aforesaid functional layer no longer performs any further change preferably after a temperature increase of the aforesaid leather to a particular comparatively high temperature,
and/or **in that** after the beginning of the change of the aforesaid functional layer, starting from the colour which exists right at the beginning, the colour of the aforesaid functional layer becomes increasingly pale depending on the temperature increase of the aforesaid leather, where the aforesaid functional layer changes to transparent and no longer performs any further change preferably after a temperature increase of the aforesaid leather to a particular comparatively high temperature,
and/or **in that** after the beginning of the change of the aforesaid functional layer, starting from the colour which exists right at the beginning, the aforesaid functional layer performs one stage or multiple stages of colour change depending on the temperature increase of the aforesaid leather in accordance with a particular colour sequence, where the colour of the aforesaid functional layer no longer performs any further change preferably after a temperature increase of the aforesaid leather to a particular comparatively high temperature.

3. Leather according to Claim 2, **characterized in that** in the case of a lowering in temperature of the aforesaid leather as a result of temperature lowering measures, the colour of the aforesaid functional layer becomes increasingly pale depending on the temperature lowering of the aforesaid leather, where preferably, if the temperature of the aforesaid leather at the beginning of temperature lowering is not higher than the aforesaid comparatively high temperature, the colour of the aforesaid functional layer becomes increasingly pale depending on the temperature lowering of the aforesaid leather, up to the point of the change to transparent, where, if the temperature of the aforesaid leather at the beginning of temperature lowering is higher than the aforesaid comparatively high temperature, the colour of the aforesaid functional layer remains initially unchanged before then becoming increasingly pale depending on the temperature lowering of the aforesaid leather, up to the point of the change to transparent,
and/or **in that** the colour of the aforesaid functional layer becomes increasingly deep depending on the temperature lowering of the aforesaid leather, where preferably, if the temperature of the aforesaid leather at the beginning of temperature lowering is not higher than the aforesaid comparatively high temperature, the colour of the aforesaid functional layer becomes increasingly deep depending on the temperature lowering of the aforesaid leather, up to the point of the change to the aforesaid colour existing right at the beginning, where, if the temperature of the aforesaid leather at the beginning of temperature lowering is higher than the aforesaid comparatively high temperature, the colour of the aforesaid functional layer remains initially transparent depending on the temperature lowering of the aforesaid leather, before then becoming increasingly deep, up to the point of the change to the aforesaid colour existing right at the beginning,
and/or **in that** the aforesaid functional layer performs one stage or multiple stages of colour change depending on the temperature lowering of the aforesaid leather, in accordance with the reverse order of the aforesaid particular colour sequence, up to the point of the change to the aforesaid colour existing right at the beginning, where, if the temperature of the aforesaid leather at the beginning of temperature lowering is higher than the aforesaid comparatively high temperature, the colour of the aforesaid functional layer remains initially unchanged depending on the temperature lowering of the aforesaid leather, before then performing one stage or multiple stages of colour change, according to the reverse order of the aforesaid particular colour sequence, up to the point of the change to the aforesaid colour existing right at the beginning.

4. Leather according to Claim 1, **characterized in that** the aforesaid agent with reversible heat-sensitive colour change is selected from organic dye with heat-sensitive colour change, inorganic material with heat-sensitive colour change or cholesteric liquid-crystal agent with colour change.

5. Leather according to Claim 1, **characterized in that** the surface treatment agent for forming the aforesaid functional layer consists, according to weight fractions, of 20 - 40 parts of resin, 15 - 50 parts, preferably 20 - 40 parts, more preferably 20 - 30 parts, of agent with reversible heat-sensitive colour change, 1-10 parts of curing agent, 30 - 90 parts of water and 1-10 parts, preferably 1 - 6 parts, of auxiliary.

6. Leather according to Claim 1, **characterized in that** the surface treatment agent for forming the aforesaid coating material layer consists, according to weight fractions, of 40 - 60 parts of resin, 1-10 parts of curing agent, 30 - 90 parts of water and 1-10 parts, preferably 1 - 6 parts, of auxiliary.

7. Leather according to any of Claims 1-6, **characterized in that** a protective layer is applied on the aforesaid functional layer, where the aforesaid protective layer preferably has a greater area than the aforesaid functional layer and completely masks the aforesaid functional layer, where the surface treatment agent for forming the aforesaid protective layer consists preferably, according to weight fractions, of 40 - 60 parts of resin, 1-10 parts of curing agent, 30 - 90 parts of water and 1-10 parts, preferably 1 - 6 parts, of auxiliary.

8. Process for producing the leather with change of surface colour depending on the temperature according to any of Claims 1-7, **characterized in that** the aforesaid process comprises at least the following steps:
(A) producing the leather base material layer,
(B) applying the coating material layer on the aforesaid leather base material layer, where the aforesaid coating material layer comprises at least a first coating material layer applied on the relevant leather base material layer, and a functional layer applied on the aforesaid first coating material layer,
**characterized in that**
the aforesaid functional layer is admixed with an agent having reversible heat-sensitive colour change, so that the aforesaid relevant functional layer performs a colour change on reaching a temperature of 30 - 80°C, where the aforesaid functional layer performs a colour change preferably on reaching a temperature of 30 - 50°C.

9. Process according to Claim 8, **characterized in that** the aforesaid functional layer is applied on the aforesaid first coating material layer using a printing roll provided with a particular pattern, where preferably there is an adaptation of the viscosity and of the flow properties of the surface treatment agent to the functional layer, so that only the surface treatment agent located in the LOGO recess of the aforesaid printing roll is able to adhere at the leather surface, whereas the surface treatment agent located outside the LOGO recess of the aforesaid printing roll is unable to adhere at the leather surface.

10. Process according to Claim 8 or 9, **characterized in that** the requisite pattern is applied on the aforesaid first coating material layer by high-temperature printing before the aforesaid functional layer is applied on the aforesaid first coating material layer.

## Revendications

1. Cuir présentant un changement de la couleur superficielle en fonction de la température, le cuir mentionné précédemment comprenant au moins une couche de matériau de base de cuir et une couche de laque, la couche de laque mentionnée précédemment comprenant au moins une première couche de laque appliquée sur la couche de matériau de base de cuir mentionnée précédemment et une couche fonctionnelle appliquée sur la première couche de laque mentionnée précédemment,
un agent présentant un changement de couleur réversible sensible à la chaleur étant présent dans la couche fonctionnelle mentionnée précédemment, de sorte que la couche fonctionnelle mentionnée précédemment accomplit un changement de couleur lorsqu'elle atteint une température de 30 à 80 °C, la couche fonctionnelle mentionnée précédemment accomplissant préférablement un changement de couleur lorsqu'elle atteint une température de 30 à 50 °C, **caractérisé en ce que**
la couche fonctionnelle mentionnée précédemment est appliquée sous la forme d'un motif déterminé partiellement sur la première couche de laque mentionnée précédemment, dans lequel le motif déterminé mentionné précédemment est préférablement un LOGO.

2. Cuir selon la revendication 1, **caractérisé en ce**
**qu'**après le début du changement de la couche fonctionnelle mentionnée précédemment de transparente à colorée, la couleur de la couche fonctionnelle mentionnée précédemment devient toujours plus profonde en fonction de l'augmentation de température du cuir mentionné précédemment, dans lequel la couleur de la couche fonctionnelle mentionnée précédemment n'accomplit plus aucun changement supplémentaire de préférence après une augmentation de température du cuir mentionné précédemment à une certaine température comparativement élevée,
respectivement **en ce qu'**après le début du changement de la couche fonctionnelle mentionnée précédemment, la couleur de la couche fonctionnelle mentionnée précédemment, depuis la couleur initiale, devient toujours plus pâle en fonction de l'augmentation de température du cuir mentionné précédemment, dans lequel la couche fonctionnelle mentionnée précédemment est changée jusqu'à être transparente et n'accomplit plus aucun changement supplémentaire de préférence après une augmentation de température du cuir mentionné précédemment à une certaine température comparativement élevée,
respectivement **en ce qu'**après le début du changement de la couche fonctionnelle mentionnée précédemment, la couche fonctionnelle mentionnée précédemment, depuis la couleur initiale, effectue un stade ou plusieurs stades du changement de couleur selon un ordre de couleur déterminé en fonction de l'augmentation de température du cuir mentionné précédemment, dans lequel la couleur de la couche fonctionnelle mentionnée précédemment n'accomplit plus aucun changement supplémentaire de préférence après une augmentation de température du cuir mentionné précédemment à une certaine température comparativement élevée.

3. Cuir selon la revendication 2, **caractérisé en ce que** lors d'un abaissement de la température du cuir mentionné précédemment par des mesures d'abaissement de la température,
la couleur de la couche fonctionnelle mentionnée précédemment devient de plus en plus pâle en fonction de l'abaissement de la température du cuir mentionné précédemment, préférablement, si la température du cuir mentionné précédemment au début de l'abaissement de la température n'est pas supérieure à la température comparativement élevée mentionnée précédemment, la couleur de la couche fonctionnelle mentionnée précédemment devenant de plus en plus pâle en fonction de l'abaissement de la température du cuir mentionné précédemment, jusqu'à devenir transparente, et si la température du cuir mentionné précédemment au début de l'abaissement de la température est supérieure à la température comparativement élevée mentionnée précédemment, la couleur de la couche fonctionnelle mentionnée précédemment restant d'abord inchangée en fonction de l'abaissement de la température du cuir mentionné précédemment, pour devenir ensuite de plus en plus pâle jusqu'à devenir transparente,
respectivement, **en ce que** la couleur de la couche fonctionnelle mentionnée précédemment devient de plus en plus profonde en fonction de l'abaissement de la température du cuir mentionné précédemment, préférablement, si la température du cuir mentionné précédemment au début de l'abaissement de la température n'est pas supérieure à la température comparativement élevée mentionnée précédemment, la couleur de la couche fonctionnelle mentionnée précédemment devenant de plus en plus profonde en fonction de l'abaissement de la température du cuir mentionné précédemment, jusqu'à devenir la couleur initiale mentionnée précédemment, si la température du cuir mentionné précédemment au début de l'abaissement de la température est supérieure à la température comparativement élevée mentionnée précédemment, la couleur de la couche fonctionnelle mentionnée précédemment restant d'abord transparente en fonction de l'abaissement de la température du cuir mentionné précédemment, pour devenir ensuite de plus en plus profonde, jusqu'à devenir la couleur initiale mentionnée précédemment,
respectivement, **en ce que** la couche fonctionnelle mentionnée précédemment effectue, en fonction de l'abaissement de la température du cuir mentionné précédemment, selon l'ordre inverse de l'ordre de couleur déterminé mentionné précédemment, un stade ou plusieurs stades de changement de couleur, jusqu'au changement vers la couleur initiale mentionnée précédemment, où, si la température du cuir mentionné précédemment au début de l'abaissement de la température est plus élevée que la température comparativement élevée mentionnée précédemment, la couleur de la couche fonctionnelle mentionnée précédemment reste d'abord inchangée en fonction de l'abaissement de la température du cuir mentionné précédemment, pour ensuite, selon l'ordre inverse de l'ordre de couleur déterminé mentionné précédemment, effectuer un ou plusieurs stades de changement de couleur, jusqu'à devenir la couleur initiale mentionnée précédemment.

4. Cuir selon la revendication 1, **caractérisé en ce que** l'agent mentionné précédemment présentant un changement de couleur réversible sensible à la chaleur est choisi parmi un colorant organique présentant un changement de couleur sensible à la chaleur, une matière inorganique présentant un changement de couleur sensible à la chaleur ou un agent cristallin liquide cholestérique présentant un changement de couleur.

5. Cuir selon la revendication 1, **caractérisé en ce que** l'agent de traitement de surface pour la formation de la couche fonctionnelle mentionnée précédemment est constitué, en parties en poids, de 20 à 40 parties de résine, 15 à 50 parties, préférablement 20 à 40 parties, plus préférablement 20 à 30 parties, d'agent présentant un changement de couleur réversible sensible à la chaleur, 1 à 10 parties d'agent de durcissement, 30 à 90 parties d'eau et 1 à 10, préférablement 1 à 6 parties d'adjuvant.

6. Cuir selon la revendication 1, **caractérisé en ce que** l'agent de traitement de surface pour la formation de la couche de laque mentionnée précédemment est constitué, en parties en poids, de 40 à 60 parties de résine, 1 à 10 parties d'agent de durcissement, 30 à 90 parties d'eau et 1 à 10, préférablement 1 à 6 parties d'adjuvant.

7. Cuir selon l'une quelconque des revendications 1 à 6, **caractérisé en ce qu'**une couche protectrice est appliquée sur la couche fonctionnelle mentionnée précédemment, la couche protectrice mentionnée précédemment présentant préférablement une surface plus grande que la couche fonctionnelle mentionnée précédemment et recouvrant totalement la couche fonctionnelle mentionnée précédemment, l'agent de traitement de surface pour la formation de la couche protectrice mentionnée précédemment étant constitué, en parties en poids, de préférence de 40 à 60 parties de résine, 1 à 10 parties d'agent de durcissement, 30 à 90 parties d'eau et 1 à 10, préférablement 1 à 6 parties d'adjuvant.

8. Procédé pour la préparation du cuir présentant un changement de couleur superficielle en fonction de la température selon l'une quelconque des revendications 1 à 7, **caractérisé en ce que** le procédé mentionné précédemment comprend au moins les étapes suivantes :
(A) préparation de la couche de matériau de base de cuir,
(B) application de la couche de laque sur la couche de matériau de base de cuir mentionnée précédemment, la couche de laque mentionnée précédemment comprenant au moins une première couche de laque appliquée sur la couche de matériau de base de cuir concernée et une couche fonctionnelle appliquée sur la première couche de laque mentionnée précédemment,
**caractérisé en ce**
**qu'**un agent présentant un changement de couleur réversible sensible à la chaleur est ajouté à la couche fonctionnelle mentionnée précédemment, de sorte que la couche fonctionnelle concernée mentionnée précédemment accomplit un changement de couleur lorsqu'elle atteint une température de 30 à 80 °C, la couche fonctionnelle mentionnée précédemment accomplit préférablement un changement de couleur lorsqu'elle atteint une température de 30 à 50 °C.

9. Procédé selon la revendication 8, **caractérisé en ce que** l'application de la couche fonctionnelle mentionnée précédemment sur la première couche de laque mentionnée précédemment est réalisée en utilisant un rouleau d'impression pourvue d'un motif déterminé, préférablement un ajustement de la viscosité et des propriétés d'écoulement de l'agent de traitement de surface de la couche fonctionnelle étant réalisé, de sorte que seul l'agent de traitement de surface se trouvant dans l'évidement de LOGO du rouleau d'impression mentionné précédemment puisse adhérer à la surface du cuir, tandis que l'agent de traitement de surface se trouvant à l'extérieur de l'évidement de LOGO du rouleau d'impression mentionné précédemment ne peut pas adhérer à la surface du cuir.

10. Procédé selon la revendication 8 ou 9, **caractérisé en ce qu'**avant l'application de la couche fonctionnelle mentionnée précédemment sur la première couche de laque mentionnée précédemment, le motif requis est appliqué sur la première couche de laque mentionnée précédemment par impression à haute température.
